# EUROPÄISCHE PATENTSCHRIFT

(11) **EP 1 294 122 B1**
(45) Veröffentlichungstag und Bekanntmachung des Hinweises auf die Patenterteilung: **28.04.2004**
(21) Anmeldenummer: 01440303.4
(22) Anmeldetag: 14.09.2001
(51) Int. Cl.: H04L 7/00

(54) **Schaltungsanordnung für einen Empfänger zum Empfang einzelner Impulsbündel**
Circuit for a single burst receiver
Circuit récépteur de signaux à rafales uniques

(43) Veröffentlichungstag der Anmeldung: 19.03.2003
(73) Patentinhaber: ALCATEL, 75008 Paris (FR)
(72) Erfinder: Tomsu, Marco, D - 71254 Ditzingen (DE); Halbauer, Hardy, D - 76275 Ettlingen (DE)
(74) Vertreter: Brose, Gerhard

(56) Entgegenhaltungen:
- US-A- 4 339 817
- US-A- 4 561 099
- US-A- 4 807 254
- US-A- 4 953 185

## Beschreibung

Die Erfindung betrifft eine Schaltungsanordnung für einen Empfänger zum Empfang einzelner Impulsbündel nach dem Oberbegriff des Anspruchs 1 und eine Sende- und Empfangseinheit nach dem Oberbegriff des Anspruchs 2.

Die Erfindung entstand im Rahmen von Arbeiten an einem breitbandigen stationären Funk-Zugangssystem, das im Bereich von 20 GHz und höher arbeitet. Solche Systeme sind meist als zellulare Punkt-zu-Mehrpunkt-Systeme ausgebildet und verwenden eine Netzstruktur, die beispielsweise vier Sektoren pro Basisstation aufweist. Sie werden mit einer adaptiven Multimode-Modulation betrieben. Jedem Teilnehmer werden innerhalb eines von der Basisstation gesendeten Rahmens bestimmte Zeitschlitze zugeteilt, die er empfangen soll.

Da der Teilnehmer die nicht für ihn bestimmten Zeitschlitze nicht auszuwerten braucht und eigentlich auch nicht darf, ist nicht sichergestellt, daß er sie überhaupt korrekt empfangen kann. Damit bleibt für ihn ein nicht-kontinuierliches Signal mit einzelnen Impulsbündeln übrig. Es ist deshalb erforderlich, daß jeweils ein Abstimmen auf die aktuellen, für die Auswertung eines Impulsbündels benötigten Parameter des Signals erfolgt. Solche Parameter sind beispielsweise der Zeichentakt und dessen Phase oder Frequenz und Phase des Trägersignals, sowie auch die Signalamplitude. Grundsätzlich kann man dieses Problem allein durch digitale Signalverarbeitung lösen; dies setzt dann aber eine mehrfache Überabtastung des Signals voraus. Die hierfür erforderlichen Analog-Digital-Wandler sind nicht nur sehr teuer, sie begrenzen auch die mögliche maximale Betriebsfrequenz. Es ist auch bekannt, das Problem dadurch zu lösen, daß die beim vorangegangenen Impulsbündel gewonnenen Parameterwerte für das jeweils aktuelle Impulsbündel wieder verwendet werden. Dies ist verhältnismäßig problemlos möglich, solange vor allem die Signalamplitude betroffen ist. Bei anderen Parametern ist dies nicht so ohne weiteres möglich.

Aus der US 4,561,099 ist eine Schaltungsanordnung bekannt, bei der die über einen Satelliten empfangenen, letztlich von verschiedenen Gegenstationen mit verschiedenen Takten kommenden Impulsbündel auszuwerten sind. Hier werden beim Empfang eines indirekt über den Satelliten von einer bestimmten Gegenstation kommenden Impulsbündels die von vorangehenden, von derselben Station kommenden Impulsbündeln bekannten, den Takt betreffenden, Parameter wiederverwendet.

Bei anderen als den genannten breitbandigen stationären Funk-Zugangssystemen kann ebenfalls eine vergleichbare Situation auftreten.

Der Erfindung liegt die Aufgabe zugrunde, eine Schaltungsanordnung und eine damit ausgerüstete Sende- und Empfangseinheit anzugeben, die preisgünstig aufgebaut werden kann und auch noch bei sehr hohen Frequenzen ein sicheres Abstimmen auf die Parameter eines Impulsbündels ermöglicht.

Diese Aufgabe wird erfindungsgemäß gelöst durch eine Schaltungsanordnung nach der Lehre des Anspruchs 1 und eine Sende- und Empfangseinheit nach der Lehre des Anspruchs 2.

Erfindungsgemäß werden also die am Ende eines Impulsbündels erreichten Parameter als Ausgangspunkt für die Abstimmung verwendet, dabei jedoch der dazwischen liegende Zeitraum berücksichtigt, indem diese Parameter bis zum Beginn des nächsten Impulsbündels extrapoliert und zu dessen Auswertung und als neuer Ausgangspunkt für das weitere Abstimmen verwendet werden.

Die Extrapolation kann noch verbessert werden, wenn auch Parameter herangezogen werden, die von weiter zurück liegenden Impulsbündeln gewonnen wurden.

Durch ein geschicktes Vorgehen zu Beginn eines neuen Impulsbündels können die neuen Parameter schnell erreicht werden.

Weitere Ausgestaltungen der Erfindung sind der nachfolgenden Beschreibung zu entnehmen.

Im folgenden wird die Erfindung unter Zuhilfenahme der beiliegenden Zeichnungen weiter erläutert:
- Figur 1: zeigt ein breitbandiges stationäres Funk-Zugangssystem, in dem erfindungsgemäße Schaltungsanordnungen in erfindungsgemäßen Sende- und Empfangseinheiten verwendet werden.
- Figur 2: zeigt den Rahmenaufbau eines Signals, das von einer Funk-Basisstation ausgesendet wird und Impulsbündel enthält, die von erfindungsgemäßen Schaltungsanordnungen in erfindungsgemäßen Sende- und Empfangseinheiten auszuwerten sind.
- Figur 3: zeigt ein Ausführungsbeispiel mit einer erfindungsgemäßen Schaltungsanordnung.
- Figur 4: zeigt den Ablauf des Abstimmens auf die aktuellen Parameter.

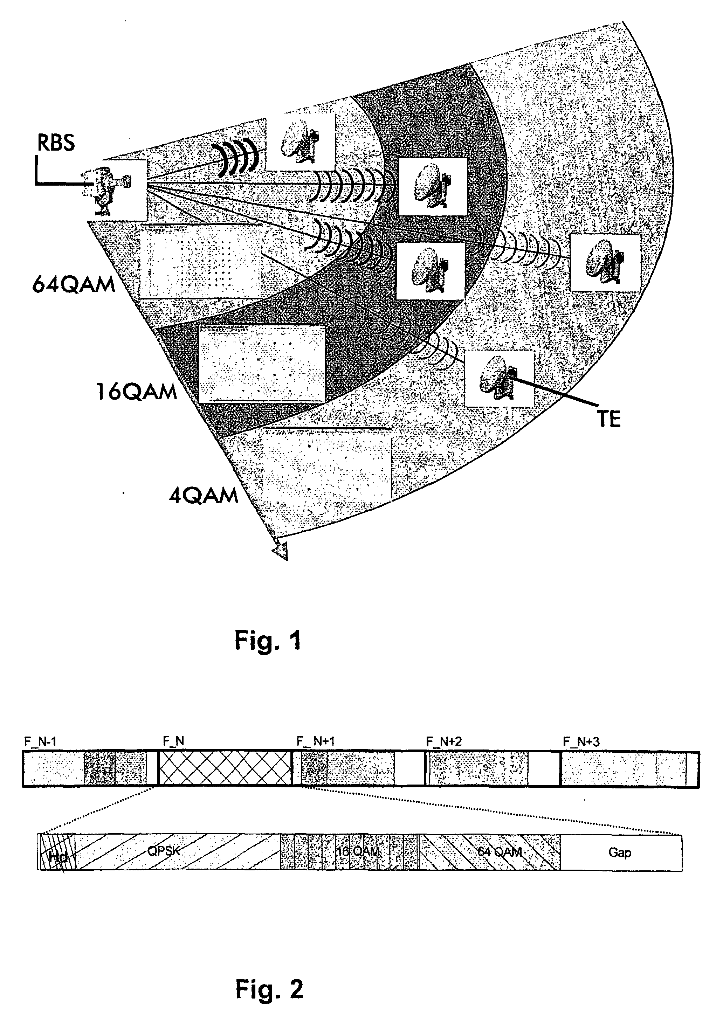

Anhand der Figur 1 wird zunächst der Aufbau eines breitbandigen, stationären Funk-Zugangssystems beschrieben, das mit einer adaptiven Multimode-Modulation betrieben wird.

Figur 1 zeigt eine Funk-Basisstation RBS, die im Mittelpunkt einer Funkzelle liegt, von der hier nur ein Sektor mit etwa 90 Grad gezeigt ist. Diese Funkzelle, und damit auch der dargestellte Sektor, ist in drei Zonen unterteilt, die hier als 64QAM, 16QAM und 4QAM bezeichnet sind. Diese Bezeichnungen geben die für die jeweiligen Zonen vorgesehene Modulationsart an. Diese Modulationsart ist auch jeweils durch ein eingeklinktes Schaubild dargestellt. Weiter sind fünf Teilnehmereinrichtungen TE eingezeichnet. Von der Funk-Basisstation RBS ist zu jeder der Teilnehmereinrichtungen TE eine Verbindungslinie eingezeichnet, die Symbole für in Richtung der Teilnehmereinrichtungen TE laufende Funkwellen tragen. Die Stärke dieser Symbole deutet die bei der jeweiligen Teilnehmereinrichtung TE auftretende Signalfeldstärke und die Kapazität des verwendeten Modulationsverfahrens an.

Funk-Zugangssysteme der gezeigten Art werden derzeit in den Standardisierungsgremien von ETSI BRAN und IEEE 802.16 standardisiert. Im Gegensatz etwa zum derzeitigen Mobilfunksystem GSM soll hier aber auch an naheliegende Stationen mit derselben Leistung gesendet werden wie an die entfernteren. Der dann am jeweiligen Empfangsort höhere Signalpegel wird dazu verwendet, den Nachrichtenverkehr durch andere Wahl der Modulation zu verdichten und damit pro Zeiteinheit einen höheren Durchsatz zu erzielen. Deshalb wird in der inneren Zone eine 64-stufige Quadraturamplitudenmodulation 64QAM, in der mittleren Zone eine 16-stufige Quadraturamplitudenmodulation 16QAM und in der äußeren Zone eine 4-stufige Quadraturamplitudenmodulation 4QAM verwendet. Durch diese Verdichtung kann im gesamten System die Kapazität etwa um den Faktor zwei bis drei erhöht werden. Die Zonen sind selbstverständlich in der Praxis nicht kreisförmig, wie hier angedeutet. Die örtlichen Gegebenheiten werden vielmehr eine Feldstärkeverteilung zur Folge haben, die nicht ausschließlich von der Entfernung zur Basisstation abhängt. Weiter sind Störungen durch Reflexionen und Mehrwegeempfang und Interferenzen durch andere Stationen zu berücksichtigen. Dies erfolgt aber letztlich von selbst.

Die 4-stufige Quadraturamplitudenmodulation 4QAM ist in ihren Eigenschaften weitgehend identisch mit der Modulationsart QPSK (Quaternary Phase Shift Keying), bei der dieselben Zustände nicht durch Amplitudenänderungen, sondern durch Phasenübergänge erreicht werden. Soweit überhaupt Unterschiede bestehen, hindern diese zumindest nicht die Zusammenarbeit zwischen einem 4QAM-Sender und einem QPSK-Empfänger oder umgekehrt.

Wie auch schon im oben genannten Mobilfunksystem werden auch hier von der Basisstation RBS sämtliche angeschlossenen Teilnehmereinrichtungen TE im Zeitmultiplex bedient. Damit ist, wie schon eingangs erwähnt, zumindest in den äußeren Zonen, für die Teilnehmereinrichtungen TE das Signal nicht laufend so zu empfangen, daß es ausgewertet werden kann. Hinzu kommt noch, daß bei geringerem Verkehr nicht alle Zeitschlitze belegt werden. Ein kontinuierlicher Empfang und eine kontinuierliche Abstimmung auf die verschiedenen Parameter des empfangenen Signals sind damit nicht möglich. Insbesondere bei den hier vorkommenden höherwertigen Modulationsarten ist dies von Bedeutung. (Ein Empfänger, der in der Lage ist, auch solche höherwertigen Signale auszuwerten, ist natürlich erst recht geeignet, wenn nur einfachere Signale, etwa kontinuierliche, zu empfangen sind.)

Im System nach Figur 1 ist nur die Richtung vom Netz (Basisstation RBS) zum Teilnehmer (Teilnehmereinrichtung TE), die sogenannte Abwärtsrichtung oder auch (in englischer Ausdrucksweise) der "Downlink" eingezeichnet. Im hier als Ausgangspunkt des Ausführungsbeispiels betrachteten System gibt es natürlich auch eine Gegenrichtung, die sogenannte Aufwärtsrichtung oder auch den "Uplink". Die vorliegende Erfindung betrifft aber, zumindest in diesem System, nur die Ausgestaltung des Empfangsteils der Teilnehmereinrichtung TE. Dessen Sendeteil ist nur insofern mit betroffen, als er in der Regel mit dem Empfangsteil eine Einheit bildet. Grundsätzlich ist aber nicht ausgeschlossen, daß in einfach gelagerten Fällen auch der Empfangsteil der Basisstation erfindungsgemäß ausgestaltet ist.

Anhand der Figur 2 wird nun kurz der Signalaufbau auf dem "Downlink" beschrieben. Der Aussendung der Basisstation RBS ist ein kontinuierliches synchrones Zeitrahmensignal zugrundegelegt. Gezeigt sind die Zeitrahmen F_N-1, F_N, F_N+1, F_N+2 und F_N+3. Der Zeitrahmen F_N ist darunter detaillierter dargestellt. Er weist vier größere Abschnitte auf, einen ersten mit der Modulationsart QPSK, einen zweiten mit der Modulationsart 16QAM, einen dritten mit der Modulationsart 64QAM und eine Sendepause Gap. Der ersten Abschnitt mit der Modulationsart QPSK beginnt mit einem Kopfteil Hd, dem sogenannten Header. Der Rest des ersten Abschnitts sowie die zwei folgenden Abschnitte sind in, hier nicht dargestellte, Zeitschlitze unterteilt, die den einzelnen Teilnehmereinrichtungen TE zugeteilt sind.

Der Kopfteil Hd dient unter anderem in einer hier nicht weiter zu untersuchenden Weise der Zuteilung dieser Zeitschlitze. Der Kopfteil Hd muß jedenfalls von allen Teilnehmereinrichtungen TE empfangen und ausgewertet werden. Diesem Kopfteil Hd geht aber meist ein Zeitraum voraus, zumindest die Sendepause Gap des vorausgehenden Zeitrahmens, in der kein Signal empfangen und ausgewertet werden kann. Das empfangbare Signal ist damit, wie der Fachmann sagt, "burstartig". Da es sich letztlich um Signale mit digitalem Inhalt handelt, werden solche Signalabschnitte, wenn nicht der englische Ausdruck "Burst" verwendet wird, als Impulsbündel bezeichnet.

Zum Empfang eines solchen Impulsbündels enthält der Kopfteil Hd deshalb zunächst eine Präambel, die dem Erkennen des Rahmenanfangs und dem Abstimmen dient. Der Empfang einer einzigen solcher Präambel reicht jedoch in der Regel nicht aus, um sofort beim Einschalten alles empfangen zu können. Bis alle Parameter feinabgestimmt sind und die Signalinhalte korrekt ausgewertet werden können, sind unter Umständen die Präambeln mehrerer Rahmen auszuwerten. Dem Abstimmen und der Feinabstimmung kommt entgegen, daß hierfür nicht nur die Präambel selbst verwendet werden kann. Vielmehr kann zumindest der ganze erste, in QPSK modulierte Abschnitt hierfür herangezogen werden. Für die anschließende Feinabstimmung können unter Umständen auch die zweiten und dritten Abschnitte herangezogen werden. Dabei dürfen während der nicht auswertbaren Zeitabschnitte die erreichten Parameter nicht aufgegeben werden. Sobald der Kopfteil Hd auswertbar ist, können Zeitschlitze zugeteilt werden, deren Inhalt dann auszuwerten ist.

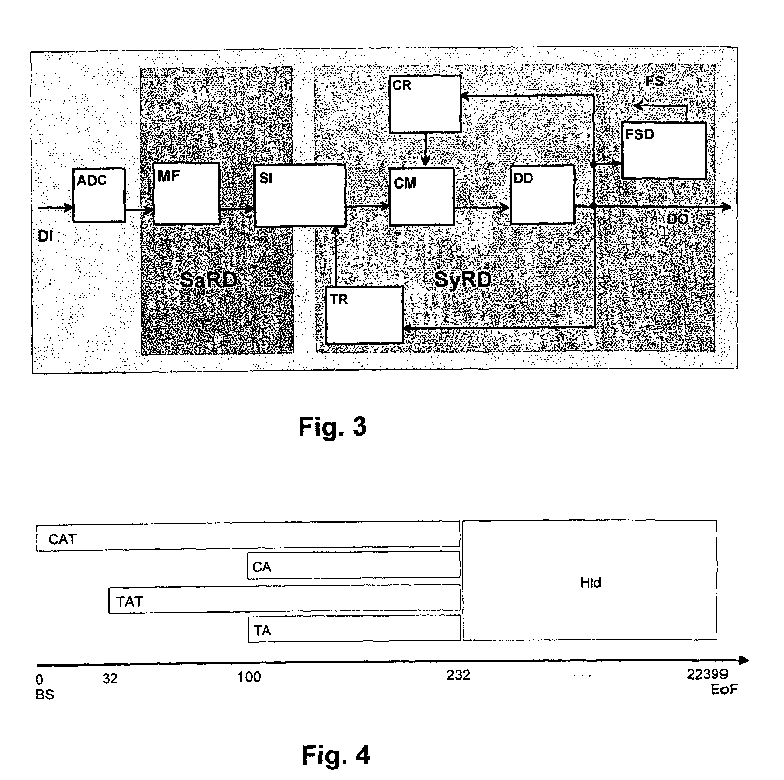

Anhand der Figur 3 wird nun ein Ausführungsbeispiel mit einer erfindungsgemäßen Schaltungsanordnung beschrieben. Figur 3 zeigt dieses Ausführungsbeispiel in Form eines Blockschaltbilds.

Die Figur zeigt einen auf einen Dateneingang DI folgenden Analog-Digital-Wandler ADC, einen Bereich SaRD ("Sample Rate Domain"), in dem mit dem Abtasttakt gearbeitet wird und einen Bereich SyRD ("Symbol Rate Domain"), in dem mit dem Zeichentakt gearbeitet wird. Am Ausgang ist der Datenausgang DO dargestellt.

Der Bereich SaRD weist ein angepasstes Filter, "Matched Filter", MF auf und greift mit einer Einheit zur Zeicheninterpolation SI in den Bereich SyRD über. Dieser weist weiter einen Komplexen Mischer CM, eine Entscheidungseinheit DD, eine Einheit zur Zeichentaktermittlung TR, eine Einheit zur Ermittlung von Trägerfrequenz- und -phase CR und einen Rahmenstartdetektor FSD auf. Der Rahmenstartdetektor FSD gibt ein Rahmenstartsignal FS ab.

Dem Dateneingang DI voraus geht ein üblicher HF-Eingangsteil, der die I- und Q-Anteile (Inphase- und Quadraturanteil) des empfangenen Signals in Zwischenfrequenzlage getrennt liefert. Genaugenommen liegt hier eine noch nicht feinabgestimmte Null-ZF und damit eigentlich eine Basisbandlage vor. Die von hier bis zum Datenausgang DO führenden Pfeile sind damit immer doppelt zu sehen. Beide Anteile werden getrennt im Analog-Digital-Wandler ADC, der damit aus zwei gleichen Teilen besteht, digitalisiert. Die Abtastrate hierfür kann bei erfindungsgemäßer Ausgestaltung der nachfolgenden Schaltungsanordnung verhältnismäßig niedrig liegen. Es genügt eine nur geringe Überabtastung, etwa mit dem Faktor 2 ... 4. Aus den Ausgangswerten des Analog-Digital-Wandlers ADC wird, hier nicht eingezeichnet, auch die Regelspannung für die automatische Verstärkungsregelung AGC gewonnen.

Anschließend werden in dem angepassten Filter MF die Signale (Inphase- und Quadratursignal) einer Filterung unterzogen. Dies erfolgt in an sich bekannter Weise unter Berücksichtigung der aktuellen Überabtastrate, die, wie erwähnt, hier nur recht gering zu sein braucht. Die Ausgangswerte dieses Filters werden in ebenfalls an sich bekannter Weise zur groben Abstimmung auf die Trägerfrequenz herangezogen.

In der Einheit zur Zeicheninterpolation SI wird mit dem mehr oder weniger genauen Zeichentakt aus der Einheit zur Zeichentaktermittlung TR aus den Stützstellen, die aus dem (gering) überabgetasteten Signal resultieren, die in der Mitte der jeweiligen Augenöffnung des Signals liegenden Amplituden ermittelt. Ab hier, im Bereich SyRD arbeitet die Schaltungsanordnung nur noch mit dem Zeichentakt.

Der Einheit zur Zeicheninterpolation SI folgen, hier nicht dargestellt, eine Einheit zum Ausgleichen von Fehlern zwischen den beiden Kanälen mit dem I- und Q-Anteil sowie eine Einheit zur Kanalentzerrung.

Im anschließenden Komplexen Mischer CM werden diese beiden Anteile in das Basisband heruntergemischt. Im Beispiel wird hier noch eine Frequenzungenauigkeit von 250 kHz nach beiden Richtungen ausgeglichen.

Die Entscheidungseinheit DD stellt die ursprüngliche Zeichenfolge wieder her und gibt sie am Datenausgang DO aus.

Diese Ausgangsdatenfolge wird nun für verschiedene Zwecke verwendet, wobei die Folge der Werte am Ausgang des Komplexen Mischers CM mit herangezogen werden kann.

Als wichtigstes ist zunächst die Ermittlung des (der) Rahmenstarts mittels des Rahmenstartsignals FS im Rahmenstartdetektor FSD, was in an sich bekannter Weise durch Bilden eines Korrelationssignals erfolgt. Bei bekannten Burstempfängern erfolgt die Detektion des Rahmenstarts jedoch bereits in dem Bereich SaRD, in dem mit dem Abtasttakt gearbeitet wird. Dies bedingt, daß auch das Signal, mit dem korreliert werden muß, nicht ein einfaches binäres Signal ist. Die Korrelation ist damit auf eine Faltung zurückgeführt, bei der eine Vielzahl von Multiplikationen mit sehr hoher Genauigkeit durchgeführt werden muß. Durch die Bildung des Rahmenstartsignals erst im Bereich SyRD kann die Vielzahl der Multiplikationen auf wenige einfache binäre Vergleiche zurückgeführt werden. Der Aufwand wird dabei drastisch reduziert.

Dies wird näher unter Zuhilfenahme der Figur 4 beschrieben. Diese zeigt den zeitlichen Ablauf des Abstimmvorgangs innerhalb eines Rahmens und damit innerhalb eines Impulsbündels. Gezeigt ist ein kompletter Rahmen mit 22400 mehrstufigen Symbolen. Er beginnt mit dem Rahmenanfang BS (Burst Start), der gleichzeitig der Anfang eines Impulsbündels und auch der Anfang eines Kopfteils Hd mit der Präambel ist. Die Abstimmung erfolgt in vier Phasen, die ineinander übergehen. Es sind dies die Phasen der Trägerermittlung- und -nachführung CAT (Carrier Acquisition/Tracking), der Zeichentaktermittlung- und -nachführung TAT (Timing Acquisition/Tracking), der Trägermittelung CA (Carrier Averaging) und der Zeichentaktmittelung TA (Timing Averaging). Anschließend folgt eine Phase Hld, während der nur bedingt noch abgestimmt werden kann. Auf einer Zeitachse sind weiter am Rahmenanfang BS die Zeichennummer 0, dann die Position des Zeichens 32, das das Ende der Präambel kennzeichnet, die Position des Zeichens 100 als wichtigen Punkt im beispielhaften Abstimmvorgang, die Position des Zeichens 232 als dem Ende des Kopfteils Hd und das Rahmenende EoF eingezeichnet.

Letztlich sind hier immer die Regelgrößen zweier Regelkreise zu ermitteln. Ein Regelkreis betrifft Trägerfrequenz und Trägerphase, der andere Regelkreis betrifft den Zeichentakt. Üblicherweise erfolgt die Gewinnung der ersten Parameter so, daß zunächst der Zeichentakt und die Trägerfrequenz und Trägerphase ähnlich wie die Erkennung des Rahmenstarts durch Korrelation noch im Bereich der Abtastrate erfolgt.

Hier jedoch wird bevorzugt von dieser Vorgehensweise wie folgt abgewichen. Von einem Ausgangswert für Trägerfrequenz und Trägerphase ausgehend wird zunächst während der ersten 32 Zeichen, also am Ende der Präambel, nur versucht, diesen Wert zu verbessern. Beim Einschalten entspricht dieser Ausgangswert natürlich dem Frequenz- und Phasenfehler Null. Später ist dieser Ausgangswert ein am Ende des vorausgegangenen Impulsbündels erreichter Wert. Dann wird, ebenfalls von einem Ausgangswert her, der Zeichentakt zu verbessern gesucht; die Ermittlung und Verbesserung des Werts für Trägerfrequenz und Trägerphase geht unverändert weiter. Bereits mit dem 100. Zeichen beginnt eine Extrapolation dieser beiden Parameter im Hinblick auf einen Ausgangswert für die Abstimmung im nächsten Impulsbündel. Solange die Abstimmung noch nicht so weit gediehen ist, daß das empfangene Signal bereits sicher demoduliert werden kann, wird am Ende des Kopfteils Hd, also beim Zeichen 232, mit der Abstimmung aufgehört und erst beim nächsten Rahmenstart weiter abgestimmt. Das Ende des Kopfteils Hd markiert hier denjenigen Bereich, in dem noch mit Sicherheit in der niedrigsten Modulationsstufe, nämlich in QPSK oder 4QAM übertragen wird.

Das Extrapolieren erfolgt im einfachsten Fall durch Fortschreiben des erzielten Werts, wobei unter Umständen das zeitliche Fortschreiten der Phasen zu berücksichtigen ist. Eine Verbesserung ergibt sich durch einfache Mittelwertbildung mit einem oder mit mehreren vorausgegangenen Parameterwerten oder durch sonstige, eine Mehrzahl vorangegangener Werte berücksichtigender Extrapolationen.

Sobald die Abstimmung soweit fortgeschritten ist, daß der Kopfteil voll demoduliert werden kann, wird von der Ermittlung der Parameter auf deren Nachführung umgeschaltet. Dies erfolgt einerseits dadurch, daß in den Regelkreisen die Filter schmalbandiger geschaltet werden und andererseits auch dadurch, daß auch die auf den Kopfteil folgenden Signalanteile mit herangezogen werden, wodurch dann auch die Abstimmung auf die höherwertigen Modulationsarten erfolgt. Damit kann dann auch festgestellt und der Basisstation mitgeteilt werden, welche Modulationsart aufgrund der bestehenden Signalfeldstärke und der Interferenzen noch mit Sicherheit verwendet werden kann.

Der hier anhand der Figur 4 beschriebene Ablauf wird in einer nicht explizit in Figur 3 dargestellten Einheit im Bereich SyRD gesteuert, die in Form einer Ablaufsteuerung den beschriebenen Ablauf steuert.

## Patentansprüche

1. Schaltungsanordnung für einen Empfänger zum Empfang einzelner Impulsbündel eines nicht-kontinuierlichen Signals, mit einer Einheit (SyRD) zum Abstimmen auf die aktuellen, für die Auswertung eines Impulsbündels benötigten Parameter des Signals, bei der die Einheit (SyRD) zum Abstimmen derart gesteuert wird, daß die am Ende eines Impulsbündels erreichten Parameter bis zum Beginn (BS) des nächsten Impulsbündels extrapoliert und zu dessen Auswertung und als Ausgangspunkt für das weitere Abstimmen verwendet werden **dadurch gekennzeichnet, daß** die Einheit (SyRD) zum Abstimmen weiter derart gesteuert wird, daß zu Beginn eines neuen Impulsbündels zuerst (CAT) auf diejenigen Parameter weiter abgestimmt wird, die für die Ermittlung der Trägerphase verantwortlich sind und erst dagegen verzögert (TAT) weiter auf diejenigen Parameter, die für die Ermittlung des Zeichentakts verantwortlich sind.

2. Sende- und Empfangseinheit für den teilnehmerseitigen Anschluß an ein lokales drahtloses Anschlußnetz (Fig.1) für das weltweite Telekommunikationsnetz, **dadurch gekennzeichnet, daß** der Empfangsteil der Sende- und Empfangseinheit eine Schaltungsanordnung nach Anspruch 1 enthält.

3. Schaltungsanordnung nach Anspruch 1, **dadurch gekennzeichnet, daß** die Einheit (SyRD) zum Abstimmen weiter derart gesteuert wird, daß zum Extrapolieren auch Parameter herangezogen werden, die von weiter zurück liegenden Impulsbündeln gewonnen wurden.

## Claims

1. A circuit configuration for a receiver for receiving single impulse bursts of a non-continuous signal, with a unit (SyRD) for adjusting to the current signal parameters needed for evaluation a burst, wherein the unit (SyRD) for the adjustment is controlled in such a way that the parameters reached at the end of a burst are extrapolated until the start (BS) of the next burst and used for its evaluation and as starting point for further adjustment, **characterized in that** the unit (SyRD) for the adjustment is further controlled in such a way that at the start of a new burst, adjustment first (CAT) continues on the parameters responsible for determining the carrier phase, and only proceeds some time after this (TAT) to the parameters responsible for determining the character clock.

2. Transceive unit for connecting a user to a local wireless subscriber line network (Fig. 1) for the global telecommunications network, **characterized in that** the receive section of the transceive unit contains a circuit configuration as in Claim 1.

3. Circuit configuration according to Claim 1, **characterized in that** the unit (SyRD) for the adjustment is further controlled in such a way that parameters obtained from earlier preceding bursts are also used for the extrapolation.

## Revendications

1. Dispositif de montage pour un récepteur destiné à la réception de trains d'impulsions individuels d'un signal non continu, équipé d'une unité (SyRD) pour l'adaptation aux paramètres du signal actuels et utilisés pour l'analyse d'un train d'impulsions, sur lequel l'unité (SyRD) est commandée pour l'adaptation de telle sorte que les paramètres obtenus à la fin d'un train d'impulsions sont extrapolés jusqu'au début (BS) du prochain train d'impulsions et sont utilisés pour son analyse et comme point de départ pour l'adaptation ultérieure, **caractérisé en ce que** l'unité (SyRD) est commandée pour l'adaptation de telle sorte que, au début d'un nouveau train d'impulsions, on fait d'abord (CAT) une adaptation aux paramètres qui sont responsables du calcul de la phase porteuse et seulement avec une temporisation (TAT) également aux paramètres qui sont responsables du calcul du rythme de caractère.

2. Unité d'émission et de réception pour le raccordement côté abonné à un réseau de raccordement sans fil local (figure 1) pour le réseau de télécommunication mondial, **caractérisée en ce que** la partie de réception de l'unité d'émission et de réception contient un dispositif de montage selon la revendication 1.

3. Dispositif de montage selon la revendication 1, **caractérisé en ce que** l'unité (SyRD) pour l'adaptation est encore commandée de telle sorte que, pour l'extrapolation, on a recours également à des paramètres qui ont été obtenus par des trains d'impulsions remontant en arrière.
